# EUROPEAN PATENT APPLICATION

(11) **EP 1 416 346 A2**
(43) Date of publication of application: **06.05.2004**
(21) Application number: 02258376.9
(22) Date of filing: 04.12.2002
(51) Int. Cl.: G05B 19/418

(54) **Method and apparatus for the control of building functional units**

(30) Priority: 31.10.2002 SG 200206604
(71) Applicant: Kyodo-Allied Industries Ltd, Singapore 628771 (SG)
(72) Inventor: Lee, Zong Tang, Singapore 628771 (SG)
(74) Representative: Power, Philippa Louise

(57) **Abstract**

Control system (10) operatively connected to a first protocol converter (12) that, in turn controls functional units (16,18), in particular FFUs (fan filter units). A second protocol converter (14) is also used for controlling a number of functional units. There may be many protocol converters such as protocol converters (12,14), with each protocol converter controlling 1,2,3,...n functional units.

## Description

### Field of the Invention

This invention relates to a method and apparatus for the control of building functional units and refers particularly, though not exclusively, to a method and apparatus for the control of fan filter units.

### Background to the Invention

At present fan filter units ("FFUs") are used in industrial facilities where clean air is required. For example, clean rooms used in the semi-conductor manufacturing industry, biotechnology research centers, and so forth. At present a relatively small number of such FFUs maybe controlled by a computer system. This computer system is operated separately to the other systems operating within the building such as, for example, security, lighting, elevator, heating, ventilation, air-conditioning, fire detection and fire extinguishing. This can cause significant problems as the FFUs may be operating in a manner inconsistent with other building functions. This may be due to the building operator having to independently control many separate functions at the same time. Also, it is not possible for the FFUs to be controlled remotely, especially remotely from the building in which they are installed.

It is therefore the principal object of the present invention to provide a method and apparatus for the control of building functional elements such as, for example, fan filter units.

### Summary of the Invention

With the above and other objects in mind the present invention provides a converter for converting signals of a first protocol to signals of a second protocol, the converter including a first transceiver, a second transceiver, and a chipset; the chipset including a chip, a microcontroller, and at least one memory.

The first transceiver may be for connecting to on I/O driver serial port, and the second transceiver is for connecting to a network port; and the chip may be a neuron chip.

The at least one memory may be one or more selected from the group consisting of: flash memory, ROM and SRAM; and the microcontroller may be for controlling data flow, data storage, and communication with external ports. Preferably, the microcontroller is a single chip microcomputer having an internal SRAM, a data bus, two operating states, linear address space, independent blocks with on-chip selections, interrupt control, and timers.

The neuron chip may include one or more functions required to acquire and process information, make decisions, generate outputs, and propagate control information; and may include a plurality of processing units on chip. Advantageously, a first processing unit executes a user application program, controls I/O parts, time events, and drivers SPI devices; a second processing unit controls a conversion protocol, and encodes and decodes messages; and a third processing unit controls a communication port.

The first and second transceivers may be selected from a group consisting of: a topology transceiver, and a non-isolation transceiver.

The present invention also provides apparatus for controlling building functional units, the apparatus including a control system for controlling the operation of a plurality of building functional units, at least one of the building functional unit operating on a first protocol with the remaining building functional units operating on a second protocol, the apparatus further including at least one server; and at least one converter for converting signals of the first protocol to the second protocol, and from the second protocol to the first protocol, to enable the control system to control the at least one of the building functional units.

The at least one converter is preferably as described above; and the at least one of the building functional units is a plurality of fan filter units. The control system may have remote access to the server.

In a final form the present invention provides a method for controlling building functional units by use of a control system for controlling the operation of a plurality of building functional units, at least one of the building functional unit operating on a first protocol with the remaining building functional units operating on a second protocol, the method including using at least one converter for converting signals of the first protocol to the second protocol, and from the second protocol to the first protocol to enable the control system to control the at least one of the building functional units.

The at least one converter may be as described above; and the at least one of the building functional units is a plurality of fan filter units. The control system may have remote access to the server.

### Description of Drawings

In order that the invention may be fully understood and readily put into practical effect there shall now be described by way of non-limitative example only a preferred embodiment of the present invention, the description being with reference to the accompanying illustrative drawings, in which:
Figure 1 is an illustration of a typical system using the present invention;
Figure 2 is a schematic view of the overall system architecture;
Figure 3 is a detailed schematic illustration of a remote control system using the present invention;
Figure 4 is a system functional block diagram;
Figure 5 is a system block diagram of the converter;

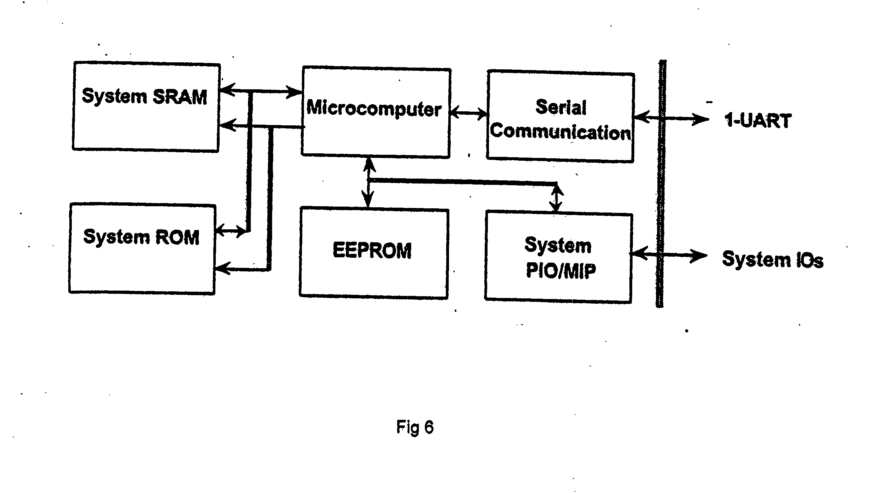

Figure 6 is a block diagram of the microprocessor;
Figure 7 is an illustration of the states through which a command message passes;
Figure 8 is an illustration of the various states of a fan filter unit;
Figure 9 is a flow chart of the main loop;
Figure 10 (a) is a flow chart of a first part of the application procedure for the converter;
Figure 10 (b) is a flow chart of a second part of the application procedure for the converter; and
Figure 10 (c) is a flow chart of a third part of the application procedure for the converter.

### Description of the Preferred Embodiment

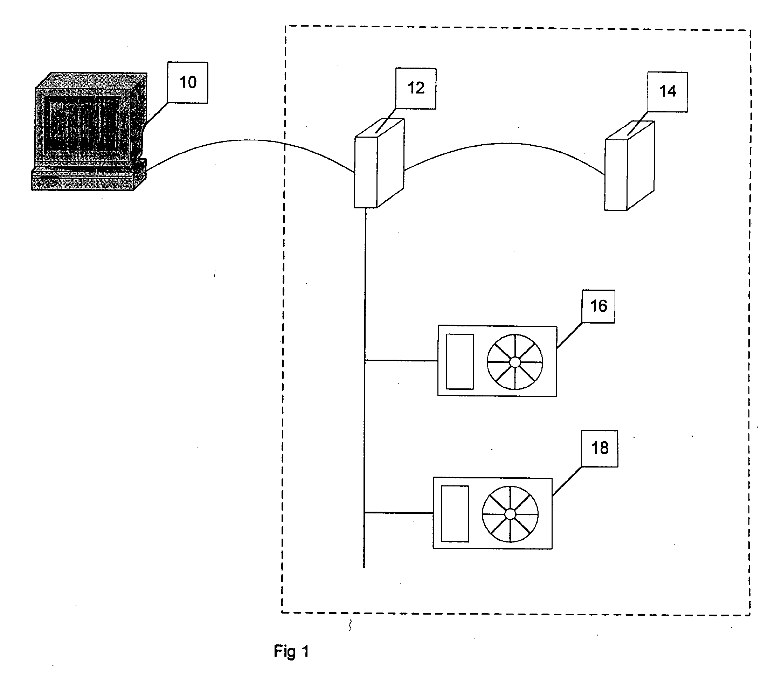

To first consider Figure 1, there is shown a control system 10 operatively connected a first protocol converter 12 that, in turn, controls FFUs 16, 18. There may be many such FFUs such as, for example, up to 32 for each converter 12. A second protocol converter 14 is also used for controlling a number of FFUs. There may be many protocol converters such as protocol converters 12, 14, with each protocol converter controlling 1, 2, 3, .......n FFUs. The number of converters 12, 14 may be any number up to, for example 32.

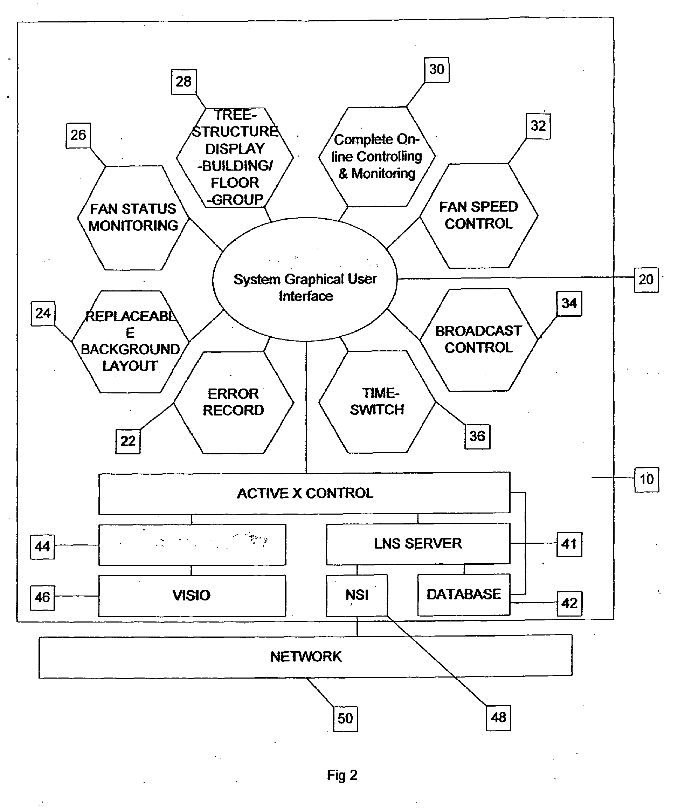

The control system 10 is shown in more detail in Figure 2. The control system 10 uses a graphical user interface 20 that is used as the functional interface for the monitoring and controlling of many functions of the FFUs. These functions include, but are not limited to: error recording 22; a replaceable background layout 24; fan status monitoring 26; a "tree" display 28 of all the FFUs under control by building and/or floor and/or group; a full functional on-line controlling and monitoring of all FFUs 30; fan speed control 32 for each fan individually as well as by building and/or floor and/or group; a time switch 36; and a broadcast control 34 for a broadcast signal to all FFUs under the control of control system 10. The broadcast control 34 is useful when an event occurs that requires the same change to be made to all FFUs simultaneously. For example, start-up, shut down, and fast shut down in the even of a fire or other event placing noxious fumes in the room, and so forth.

The control system 10 may operate through a management system 41, and the server may use a database 42 and network system interface 48. The control system 10 may also use an integration tool 44 and graphics display system 46. The control system 10 exercises its control of the FFUs over a network 50. The FFUs are each polled continuously over the network so the control system 10 is aware of the current status of each FFU at all times. The control system 10 can also control the operation of each FFU - primarily the on/off function and speed of each FFU.

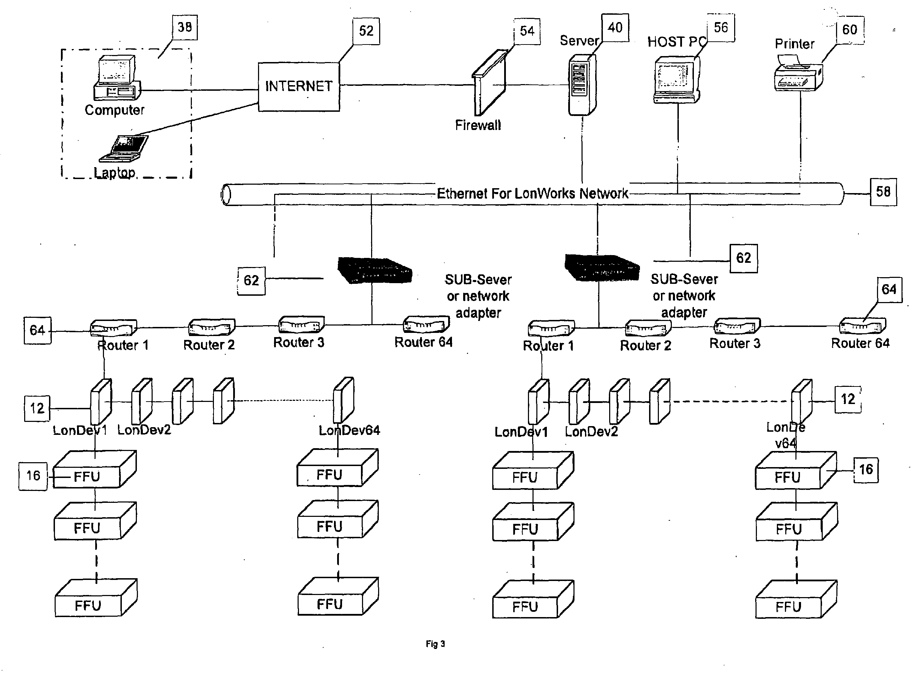

Figure 3 shows the operation of the control from a remote location. A computation device 38 uses the Internet 52 to gain access to server 40 through a firewall 54. The computation device 38 may be a desktop computer, personal computer, laptop computer, notebook computer, personal digital assistant, or any other computation device.

In the building or buildings in which the FFUs are located, an Ethernet 58 is used for communication purposes. This may also allow the host computer 56 and a printer 60 to be connected to the server 40. Also connected to the Ethernet 58 are sub-servers or network adapters 62, each of which controls a plurality of routers 64. There may be any number of routers from one up to a relatively high number such as, for example, sixty-three routers 64. Each router 64 controls a number of protocol converters 12. Again, there may be any number of converters 12 from one to a relatively high number such as, for example, sixty-four, for each router 64. The number of routers 64 may be the same as the number of the converters 12, or may be different.

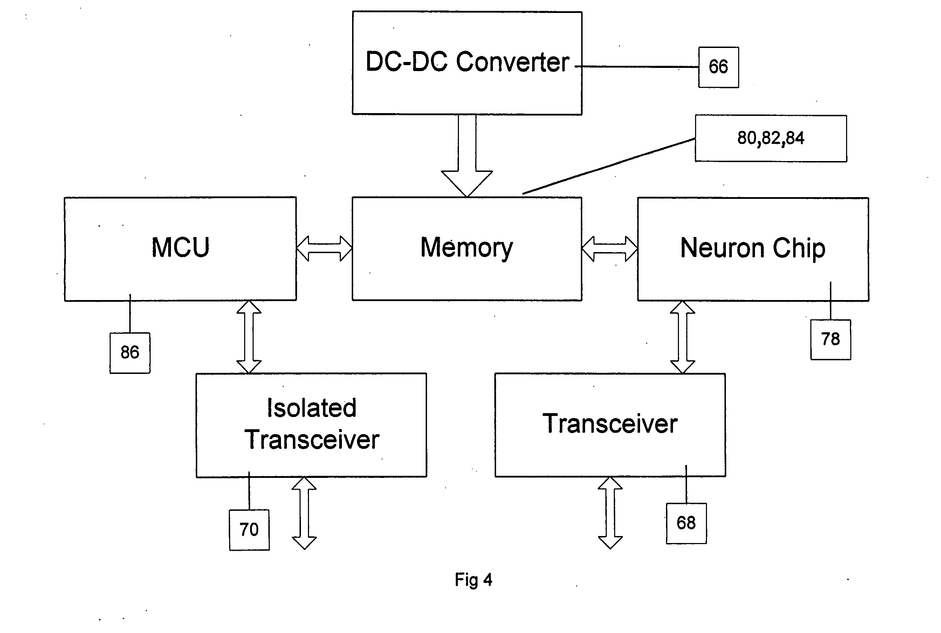

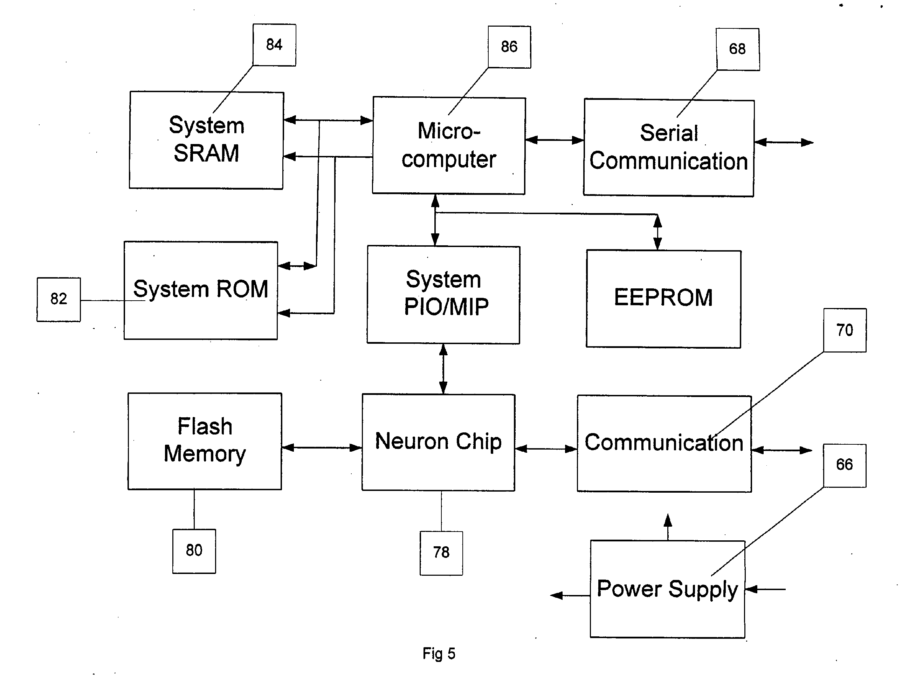

To refer to Figures 4 and 5, each of the converters 12 has a DC-DC Power Converter 66, first transceiver 68 connecting to an I/O driver serial port 72, second transceiver 70 connecting to a network port 74, and a chipset 76. The chipset 76 may include a neuron chip 78, Flash memory 80, ROM 82, SRAM 84, microcontroller 86.

The microcontroller 86 is the processing unit of the converter 12 that controls the data flow, data storage and communicates with external ports.

Preferably it is a single-chip microcomputer having an internal SRAM, a data bus, two operating states, linear address space, independent blocks with on-chip selections, interrupt control, and timers.

The converter 12 has program and data files so the mode is selected for the CPU mode that has an address bus so the program can directly access memory in blocks. The hardware uses a first block as user's program area, and a second block as system data area.

The internal memory is an internal memory such as, for example, SRAM for user's data. When the EMC is cleared, the internal SRAM maybe split into two parts, with the EPROM being located at the first block, and the SRAM being located at the second block. The system boot-up routine, communication function, interrupt handlers and application functions may also occupy the first block. All system data, files, tables and variables may use the second block, which may also be reserved for system development and feature functions. An EEPROM may be used to store key data and system configurations if applicable.

The neuron chip 78 generally provides a relatively low-cost control network, and may include all the functions required to acquire and process information, make decisions, and generate outputs; as well as to propagate control information, via a standard protocol, through a wide variety of network media.

The neuron chip 78 has a number, preferably three 8-bit CPUs on chip. One CPU executes the user application program such as by controlling I/O ports, time events, driving SPI devices. The second CPU controls the protocol, properly encoding and decoding the message to be sent over the network. The third chip controls the network communication port that physically sends and receives the packets.

It is preferably a single Neuron chip with on-chip memory, programmable I/O pins, and two timer/counters for frequency and timer I/O network communication port

The Memory Map has linear space for both on-chip utilities and user program, which provide full data bus and address bus for external memory.

The internal EEPROM contains network configurations and addressing information, neuron chip identification code and EEPROM. The EEPROM can be used for user program code or read-mostly data. It is preferred that the EEPROM is not used for user data storage.

The internal SRAM is preferably for user's data, which default location may also be used to store system data, stack segments, and application data.

The neuron chip includes system boot-up routine, communication function, protocol, interrupt handlers and all I/O drivers.

The user application program external memory space can be occupied by combinations of RAM, PROM, EPROM, EEPROM and Flash memory. In the converter, this area is preferably used for application program and constant data only.

This allows two choices of transceiver on the communication board, including free topology transceiver, and non-isolation transceiver. Both transceivers are supported by interoperable physical channel criteria.

In this way, the converters 12 can receive information and commands relating to the FFUs in a protocol unacceptable to the FFUs in protocol unacceptable to the FFUs covert them into a protocol acceptable to the FFUs, and send them to the FFUs.

Similarly information from the FFUs can be received by the converters 12, converted to a protocol acceptable to one or more of the server 40, host computer 56, and sub-servers/network adapters 62, and send it to them. As such, the FFUs can be incorporated with the full management and reporting system.

To now refer to Figures 8 to 10, the fan control protocol converter 12 is a microprocessor-based controller. It is able to link up to 31 fan filter units.

The fan control protocol converter 12 consists of node object and 31 FFU controller objects. Each object consists of a set of network variables for setting and monitoring FFU speed and status.

Object status request support: actual speed, target speed and maximum speed; resetting fan; fan status; setting rating factor; and fan address. The node object is used for communicating with the node and its objects.

The object request input network variable is used to request a particular mode for a particular object within a node, including normal, update status and report mask.

The object status output network variable is used to report the status for any object in a node. The valid range is any value within defined limits.

The manufacturer defined network variable input network variable is used to broadcast commands to all FFUs. The valid range for all fields is any value within defined limits.

The mandatory network variable output network variable provides the actual FFU fan speed. The valid range is within manufacturer's specifications such as, for example, 0-65535 rpm, and is preferably with 1 rpm resolution. The target speed input network variable receives value to control the fan speed.

The manufacturer defined network variable is used to provide the operational status of the FFU. It provides the ability to determine internal alarm conditions in the FFU such as high temperature, locked motor, internal communication error, thermal overload of electronics heat sink overload, communication error between the fan control protocol converter and the FFU, fan not operating, thermal overload of motor, hall failure, seized motor, and so forth.

The reset fan input network variable resets fan filter unit either OFF or ON

The rating factor variable sets the rating factor of the fan filter unit that influences the operation target value of the fan. The valid range is 0 to 100%. The maximum speed variable sets the maximum speed at which the FFU will be required to run. The valid range is within manufacturer's specifications such as, for example, 0-65535 rpm, preferably with 1 rpm resolution.

The fan address output network variable provides the address of the FFU. The valid range is 1-31. If the address is 0 it means the FFU is not linked to a fan control protocol converter. The configuration property is used to provide physical location information of the fan filter unit.

With reference to Figures 7 to 10 the software design is a foreground, background type of architecture, with a main loop that executes the driver and application code repeatedly.
The application code is organised as a state machine with 4 states:
CHECK_DATA_STRUCT
WAIT_INTERVAL
SEND_COMMAND
GET_RESPONSE

The interval between commands is dictated by the bus protocol. It may be, for example, in the range 1 to 10ms, preferably 4ms. The interval for the FFU to response is set at 50ms.

Sending and receiving the data to/from the FFUs is carried out within the serial interrupt service routine. Periodically, such as every 5 seconds, an off-line FFU is checked to see if it has come on-line.

The major variables used in the application are:-

| Name of variable | Type and Description |
|---|---|
| PC() | Dynamic Array of Protocol Converter objects. (indexed from 1) |
| PC Area() | Dynamic Array of User-defined Type, Protocol Converter Area (indexed from 1) |
| ColPCUnAssigned | Collection object containing references to Protocol Converter objects |
| ColFFU | Collection object containing references to button objects |
| ColNotSetPool | Collection object containing references to Protocol Converter objects |
| ColSetPool | Collection object containing references to Protocol Converter objects |

PC() is a dynamic array containing references to Protocol Converter ("PC") objects. Each PC object represents one protocol converter. The size of the array is determined from the database file. The information obtained from the database is compared with those in the log file. The information in log file will be restored if there is a match. For those devices that do not have a record in the log file, they will be added to the colPCUnAssigned collection.

The software can track which converters require manipulation due to user action. Initially, all converter references are contained in the unassigned collection, but once the user assigns a converter to an area, that converter's reference will be removed and added to the collection of the particular area. Likewise, if the user should decide to remove the converter from an area, then its reference will be removed from that area's collection and added to the unassigned.

The converter contains the several attributes and methods, including:

| | |
|---|---|
| name | This stores the device's name |
| caption | This is the number shown on the converter's button |
| area | Indicates the particular converter has been assigned to which area. |
| array | This is the index array where the particular converter's reference is stored. |
| button | Contains a reference to the command button representing the converter. |
| node | Contains a reference to the node in the tree for the converter. |

Each FFU class has the several attributes including:

| | |
|---|---|
| Fan Index | Unique number assigned to each FFU, for sorting purposes. |
| Time Switch Enabled | Indicates whether the FFU is time-switch enabled. |
| Fan On Line | Set to True whenever an FFU comes online. |
| Fan Error | Indicates whether the FFU is faulty |
| Fan Button Visible | Indicates whether the command button for the FFU is visible. |
| Old Status | Keeps the previous status value. |
| Actual Speed | Holds reference to network variable "Actual Speed". |
| Target Speed | Holds reference to network variable "Target Speed". |
| Rating Factor | Holds reference to network variable "Rating Factor". |
| Max Speed | Holds reference to network variable "Max Speed". |
| Status | Holds reference to network variable "Fan Status". |
| Fan Address | Holds reference to network variable "Fan Address". |
| Reset Fan | Holds reference to network variable "Reset Fan". |

For each Protocol Converter, there are many FFU status network variables to be monitored. These variables will report the status of each FFU, and an event will be generated (i.e., "report by exception") whenever their values changes.

The network variables target speed and actual speed for all FFUs are set to "report by exception". At the same time, the fan status for all FFUs will be disabled from "reporting by exception" and will be polled by explicitly reading them.

The rest of the network variables are read using the explicit read and write methods.

Another event used is the on attachment event. This will provide feedback whenever a converter is connected to or disconnected from, the network.

The program starts execution and will gathers all the configuration information. It will then prompt the user to login. Once the user has logged in.

There is displayed a progress bar dialog box to indicate the progress of opening the database and retrieval of the references to the network variables from the database. Once this is done, setting up of the nodes for the tree view is loaded.

A timer control is used to schedule the time switch function. After that, the program reacts to events generated by the user and events.

Whilst there has been described in the foregoing description a preferred embodiment of the present invention, it will be understood by those skilled in the technology that many variations in details of design, construction or operation may be made without departing from the present invention.

The present invention extends to all features disclosed both individually, and in all possible permutations and combinations.

## Claims

1. A converter for converting signals of a first protocol to signals of a second protocol, the converter including a first transceiver, a second transceiver, and a chipset; the chipset including a chip, a microcontroller, and at least one memory.

2. A converter as claimed in claim 1, wherein the first transceiver is for connecting to on I/O driver serial port, and the second transceiver is for connecting to a network part.

3. A converter as claimed in claim 1 or claim 2, wherein the chip is a neuron chip.

4. A converter as claimed in any one of claims 1 to 3, wherein the at least one memory is one or more selected from the group consisting of: flash memory, ROM and SRAM.

5. A converter as claimed in any one of claims 1 to 4, wherein the microcontroller is for controlling data flow, data storage, and communication with external ports.

6. A converter as claimed in any one of claims 1 to 5, wherein the microcontroller is a single chip microcomputer having an internal SRAM, a data bus, two operating states, linear address space, independent blocks with on-chip selections, interrupt control, and timers.

7. A converter as claimed in claim 3, wherein the neuron chip includes one or more functions required to acquire and process information, make decisions, generate outputs, and propagate control information.

8. A converter as claimed in claim 3 or claim 7, wherein the neuron chip includes a plurality of processing units on chip.

9. A converter as claimed in claim 8, wherein a first processing unit executes a user application program, controls I/O parts, time events, and drivers SPI devices.

10. A converter as claimed in claim 8 or claim 9, wherein a second processing unit controls a conversion protocol, and encodes and decodes messages.

11. A converter as claimed in any one of claims 8 to 10, wherein a third processing unit controls a communication part.

12. A converter as claimed in any one of claims 1 to 11, where in the first and second transceivers are selected from a free group consisting of: the topology transceiver and a non-isolation transceiver.

13. Apparatus for controlling building functional units, the apparatus including a control system for controlling the operation of a plurality of building functional units, at least one of the building functional unit operating on a first protocol with the remaining building functional units operating and second protocol , the apparatus further including at least one server; and at least one converter for converting signals of the first protocol to the second protocol, and from the second protocol to the first protocol, to enable the control system to control the at least one of the building functional units.

14. Apparatus as claimed in claim 13, wherein the at least one converter is as claimed in any one of claims 1 to 12.

15. Apparatus as claimed in claim 13 or claim 14, wherein the at least one of the building functional units is a plurality of fan filter units.

16. Apparatus as claimed in any one of claims 13 to 15, wherein the control system has remote access to the server.

17. A method for controlling building functional units by use of a control system for controlling the operation of a plurality of building functional units, at least one of the building functional unit operating on a first protocol with the remaining building functional units operating and second protocol , the method including using at least one converter for converting signals of the first protocol to the second protocol, and from the second protocol to the first protocol to enable the control system to control the at least one of the building functional units.

18. A method as claimed in claim 17, wherein the at least one converter is as claimed in any one of claims 1 to 12.

19. A method as claimed in claim 17 or claim 18, wherein the at least one of the building functional units is a plurality of fan filter units.

20. A method as claimed in any one of claims 17 to 19, wherein the control system has remote access to the server.
